# EUROPEAN PATENT SPECIFICATION

(11) **EP 3 940 437 B1**
(45) Date of publication and mention of the grant of the patent: **04.12.2024**
(21) Application number: 20818393.9
(22) Date of filing: 23.03.2020
(51) Int. Cl.: G02B 6/38

(54) **METHOD FOR PREPARING MULTI-CORE CLUSTER OPTICAL FIBER CONNECTOR**
VERFAHREN ZUR HERSTELLUNG EINES GLASFASERVERBINDERS MIT MEHRKERN-CLUSTER
PROCÉDÉ DE PRÉPARATION D'UN CONNECTEUR DE FIBRE OPTIQUE EN GRAPPE MULTICOEUR

(30) Priority: 03.06.2019 CN 201910475214
(43) Date of publication of application: 19.01.2022
(73) Proprietor: Jiangsu Fasten Optoelectronics Technology Co., Ltd, Jiangyin, Jiangsu 214431 (CN)
(72) Inventor: ZHAO, Xia, Jiangyin, Jiangsu 214431 (CN); ZHANG, Enlong, Jiangyin, Jiangsu 214431 (CN); SUN, Weixiong, Jiangyin, Jiangsu 214431 (CN); ZHANG, Dongmei, Jiangyin, Jiangsu 214431 (CN); ZHOU, Qiaolin, Jiangyin, Jiangsu 214431 (CN); MA, Huiying, Jiangyin, Jiangsu 214431 (CN); LI, Shuang, Jiangyin, Jiangsu 214431 (CN); LIU, Yu, Jiangyin, Jiangsu 214431 (CN); GE, Jifan, Jiangyin, Jiangsu 214431 (CN)
(74) Representative: Huang, Liwei
(86) International application number: PCT/CN2020/080660
(87) International publication number: WO 2020/244281

(56) References cited:
- CN-A- 103 587 019
- CN-A- 104 152 899
- CN-A- 105 759 347
- CN-A- 110 187 446
- CN-U- 208 230 247
- US-A- 3 717 531
- US-A- 4 892 381
- US-A- 5 521 996
- US-A1- 2004 037 510
- US-A1- 2014 010 501
- US-B1- 6 349 572

## Description

### Technical field

The present invention relates to a preparation method, in particular to a method for preparing multi-core cluster fiber connectors, which belongs to the technical field of passive optical devices.

### Background art

At present, the cluster fiber connector is one of the main accessories of a laser projector, which uses fiber to transmit a laser signal. Compared with the DLP projection system (with the core components including a DMD digital micromirror) and 3LCD (with core components including 3 LCD transmissive liquid crystal) projection systems, the cluster fiber connector has the advantages of clearer image quality, lower transmission loss, and higher lumens under the same power.

Now, the large-screen projection system has undergoing rapid development in the domestic market, and the pace of application and promotion of the three-color laser display technology is accelerating. Therefore, higher requirements has been proposed with respect to the demands and innovation of the cluster fiber connectors. The existing bonding preparation process is challenged by the problems such as complicated operation, long curing time, insufficient efficiency of finished products, and short service life, especially, the molding by the bonding process has the risk of adhesive flaking as being affected by the characteristics of the high-temperature resistant inorganic adhesive itself. To sum up, the adhesive-bonding process is not so highly-efficient to prepare cluster fiber connectors to respond to the huge market demand, so it is in an urgent need to develop a preparation device or a preparation method to overcome the said problems.

US 4892381A discloses an optical fiber connector or ferrule and a method for fabricating the connector in which a fiber optic bundle is bonded to the connector by a metal powder compact. A bundle of gold coated optical fiber is prepared and inserted into a two-part ferrule. Internal walls of the ferrule comprise metal layers and following a coil induction heating method these layers bond the bundle to the ferrule.

### Detailed description of the invention

The purpose of the present invention is to overcome the above deficiencies and provide a method for preparing a multi-core cluster fiber connector, which can be used to effectively improve the preparation efficiency of the multi-core cluster fiber connectors and the connection strength of the prepared product.

The present invention achieves the purpose as follows:
A method for preparing a multi-core cluster fiber connector, comprising the following steps:
Step 1. Arrange a plurality of metalized fibers to form a fiber bundle;
Step 2. Clean the surface of the fiber bundle, and align the front end faces of all fibers in the fiber bundle;
Step 3. Immerse the front end of the fiber bundle into a metal slurry to allow the metal slurry coated over the front end of the fiber bundle;
Step 4. Put a first clamp on the fiber bundle;
Step 5. Insert the fiber bundle processed by step into a ferrule;
Step 6. Put a high-frequency coil on the fiber bundle, and locate the ferrule between the fiber bundle and the high-frequency coil;
Step 7. Put a second clamp on the fiber bundle, and make the ferrule and the high-frequency coil located between the first clamp and the second clamp;
Step 8. Energize the high-frequency coil to heat the metal slurry filled between the fiber bundle and the ferrule, and volatilize the organic solvent therein, so that the hot-melted metal can serve as a seal between the fiber bundle and the ferrule.

The present invention provides a method for preparing a multi-core cluster fiber connector, which is characterized in that in step 1, the fiber bundle is coated with nickel, and having a coating thickness of 8. 10µm, and the fiber length is 8cm.

The present invention provides a method for preparing a multi-core cluster fiber connector, which is characterized in that the length of the metal slurry attached to the front end of the fiber bundle is not less than a distance between the rear end face of the ferrule and the front end face of the fiber bundle.

The invention provides a method for preparing a multi-core cluster fiber connector, wherein the distance between the front end face of the first clamp and the front end face of the fiber bundle is 6 cm, and the front end face of the second clamp is flush with the front end face of the fiber bundle; the distance between the front end face of the fiber bundle and the front end face of the ferrule is within 1 - 2.5cm; the gap between the hole of the ferrule and the ex-circle of the fiber bundle is 0.1mm, that is, the diameter of the hole of the ferrule is 0.2mm larger than the diameter of the ex-circle of the fiber bundle.

The present invention provides a method for preparing a multi-core cluster fiber connector, wherein the high-frequency coil is energized for 4-6S, and in step 8 the fiber bundle is placed vertically downward; the length of the high-frequency coil is equal to that of the ferrule.

The present invention provides a method for preparing a multi-core cluster fiber connector, wherein the inner hole of the first clamp and the inner hole the second clamp are both in regular hexagon.

The present invention provides a method for preparing a multi-core cluster fiber connector, wherein the metalized fiber is a large-core energy fiber, with a core diameter of 400µm and coatings of 420µm and 440µm respectively.

The present invention provides a method for preparing a multi-core cluster fiber connector, wherein the metal slurry is a mixed slurry of metal powder particle and organic volatile solvent, and the metal powder particle ispure aluminum and the diameter of the powder particle is not greater than 1um.

The present invention provides a method for preparing a multi-core cluster fiber connector, wherein the organic volatile solvent is alcohol, acetone or liquid paraffin, and the organic volatile solvent accounts for 15-25% by weight.

The present invention provides a method for preparing a multi-core cluster fiber connector, wherein the first clamp is made of a flexible material, and the second clamp is made of a high-temperature resistant material.

Compared with the prior art, the present invention has the advantages that: the present invention uses high-frequency coils to make the fiber bundle and ferrule welded together by hot-melt metal slurry to form a complete structure, which not only improves the preparation effect, but also greatly improves the quality of the prepared multi-core cluster fiber connector. Therefore, the present is beneficial to improve the market competitiveness of the product.

### Description of the Attached Drawings

FIG. 1 depicts a schematic cross-sectional view of the ferrule and fiber bundle in a method for preparing a multi-core cluster fiber connector according to the present invention;
FIG.2 depicts a combination diagram of the ferrule and the fiber bundle in a method for preparing the multi-core cluster fiber connector according to the present invention;
FIG.3 depicts a diagram of the front and rear ends of a method for preparing a multi-core cluster fiber connector that are fixed by a first clamp and a second clamp according to the present invention;
FIG.4 depicts a schematic diagram of heating via a high-frequency coil a method for preparing a multi-core cluster fiber connector according to the present invention;

Wherein:
Fiber bundle 1, ferrule 2, first clamp 3, second clamp 4, high-frequency coil 5.

### Detailed description of embodiments

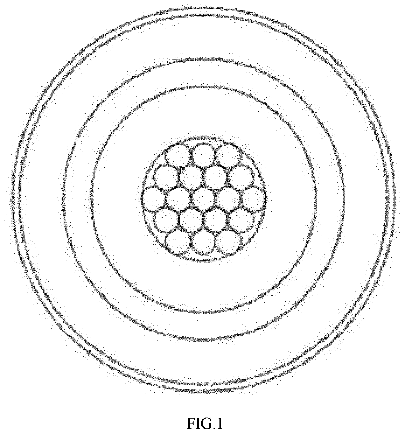

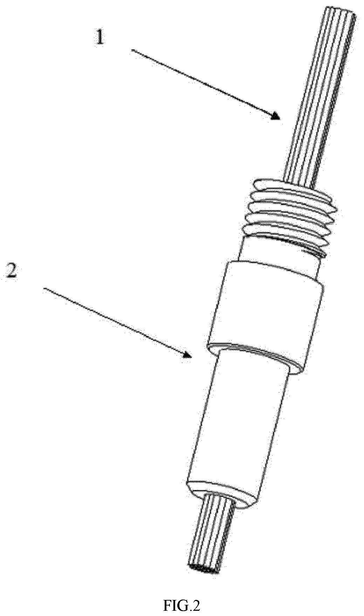

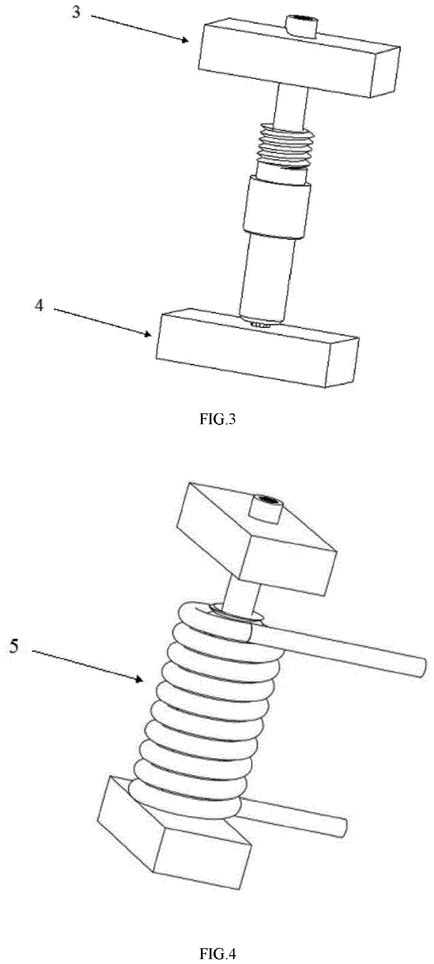

As shown in FIG. 1 to FIG.4, the present invention relates to a method for preparing a multi-core cluster fiber connector, which comprises the following steps:
Step 1. Arrange a plurality of metalized fibers to form a fiber bundle 1, wherein the fiber is coated with nickel, and the coating thickness is 8∼10µm, and the fiber length is 8cm;
Step 2. Clean the surface of the fiber bundle 1, and align the front end faces of all fibers in the fiber bundle 1;
Step 3. Immerse the front end of the fiber bundle 1 into a metal slurry to make the metal slurry coated over the front end of the fiber bundle 1, and ensure the length of the metal slurry attached to the front end of fiber bundle 1 is 5cm;
Step 4. Put a first clamp 3 on the fiber bundle 1, and keep the distance between the front end face of the first clamp 3 and the front end face of the fiber bundle 1 as 6 cm;
Step 5. Insert the fiber bundle 1 processed by step 3 into a ferrule 2, and keep the gap between the aperture of the ferrule 2 and the ex-circle of the fiber bundle 1 as 0.1mm (that is, the diameter of the hole of the ferrule 2 is 0.2mm larger than the diameter of ex-circle of the fiber bundle 1), and the distance between the front end face of the fiber bundle 1 and the front end face of the ferrule 2 is 1-2.5cm;
Step 6. Put a high-frequency coil 5 on the fiber bundle 1 and make the ferrule 2 located between the fiber bundle 1 and the high-frequency coil 5; and ensure the length of the high-frequency coil 5 equals to that of the ferrule 2;
Step 7. Put a second clamp 4 on the fiber bundle 1, and make the front end face of the second clamp 4 flush with that of the fiber bundle 1; and locate the ferrule 2 and the high-frequency coil 5 between the first clamp 3 and the second clamp 4;
Step 8. Energize the high-frequency coil 5 to heat the metal slurry filled between the fiber bundle 1 and the ferrule 2, and volatilize the organic solvent therein, so that the hot-melted metal serves as a seal between the fiber bundle 1 and the ferrule 2; wherein the high-frequency coil 5 is energized for 4-6S; preferably, the fiber bundle 1 is placed vertically downward during operation, and the high-frequency coil 5 only covers the length of the ferrule 2;

Further, the inner hole of the first clamp 3 and the inner hole of the second clamp 4 are both in regular hexagon;

Further, the metalized fiber is a large-core energy fiber, with a core diameter of 400µm and coatings of 420µm and 440µm respectively.

Further, the metal slurry is a mixed slurry of metal powder particle and organic volatile solvent, and the metal powder particle ispure aluminum and the diameter of the powder particle is not greater than 1µm. Further, the organic volatile solvent is alcohol, acetone or liquid paraffin, and the organic volatile solvent accounts for 15-25% by weight;

Further, the first clamp 3 is made of a flexible material, such as rubber, nylon, and silica gel; the second clamp 4 is made of a high-temperature resistant material, such as graphite or ceramic.

By replacing the traditional bonding preparation process of multi-core cluster fiber connectors by hot-melting the metalized fiber, the above method has the advantages of better temperature resistance, compact fiber arrangement, controllable collimation, and extended service life. This invention contributes to higher output efficiency while reducing the difficulty of the process.

Besides, the connector prepared using the method of the present invention embodies sealing strength, hardness, compactness and reliability superior to that of the connector made by the bonding process, and it can resist temperature as high as 1300°C, in which case no volatile impurities are generated and there is no carbonation.

## Claims

1. A method for preparing a multi-core cluster fiber connector, comprising the following steps:
Step 1, arranging a plurality of metalized fibers to form a fiber bundle (1);
Step 2, cleaning the surface of the fiber bundle (1), and aligning the front end faces of all fibers in the fiber bundle (1);
Step 3, immersing the front end of the fiber bundle (1) into a metal slurry to make the metal slurry coat over the front end of the fiber bundle (1);
Step 4, putting a first clamp (3) on the fiber bundle (1);
Step 5, inserting the fiber bundle (1) processed by step 3 into a ferrule (2);
Step 6, providing a high-frequency coil (5) around the fiber bundle (1) so that the ferrule (2) is located between the fiber bundle (1) and the high-frequency coil (5);
Step 7, putting a second clamp (4) on the fiber bundle (1); and locating the ferrule (2) and the high-frequency coil (5) between the first clamp (3) and the second clamp (4);
Step 8, energizing the high-frequency coil (5) to heat the metal slurry filled between the fiber bundle (1) and the ferrule (2), and to volatilize organic solvent in the metal slurry, so that the hot-melted metal can serve as a seal between the fiber bundle (1) and the ferrule (2).

2. The method for preparing a multi-core cluster fiber connector according to claim 1, wherein in step 1, the fiber bundle (1) is coated with nickel, and has a coating thickness of 8-10 µm, and the fiber length is 8 cm.

3. The method for preparing a multi-core cluster fiber connector according to claim 1, wherein the length of the metal slurry attached to the front end of the fiber bundle (1) is not less than a distance between the rear end face of the ferrule (2) and the front end face of the fiber bundle (1).

4. The method for preparing a multi-core cluster fiber connector according to claim 1, wherein the distance between the front end face of the first clamp (3) and the front end face of the fiber bundle (1) is 6 cm, and the front end face of the second clamp (4) is flush with the front end face of the fiber bundle (1); the distance between the front end face of the fiber bundle (1) and the front end face of the ferrule (2) is within 1 - 2.5 cm; the gap between the hole of the ferrule (2) and the ex-circle of the fiber bundle (1) is 0.1mm, that is, the diameter of the hole of the ferrule (2) is 0.2 mm larger than the diameter of the ex-circle of the fiber bundle (1).

5. The method for preparing a multi-core cluster fiber connector according to claim 1, wherein the high-frequency coil (5) is energized for 4-6 S, and in step 8 the fiber bundle (1) is placed vertically downward; the length of the high-frequency coil (5) is equal to that of the ferrule (2).

6. The method for preparing a multi-core cluster fiber connector according to claim 1, whereinboth the first clamp (3) and the second clamp (4) have an inner hole in regular hexagon.

7. The method for preparing a multi-core cluster fiber connector according to claim 1, wherein the metalized fiber is a large-core energy fiber, with a core diameter of 400 µm and coatings of 420 µm and 440 µm respectively.

8. The method for preparing a multi-core cluster fiber connector according to claim 1, wherein the metal slurry is a mixed slurry of metal powder particles and organic volatile solvent, and the metal powder particle is pure aluminum and the diameter of the powder particle is not greater than 1 µm.

9. The method for preparing a multi-core cluster fiber connector according to claim 8, wherein the organic volatile solvent is alcohol, acetone or liquid paraffin, and the organic volatile solvent accounts for 15-25% by weight.

10. The method for preparing a multi-core cluster fiber connector according to claim 1, wherein the first clamp (3) is made of a flexible material, and the second clamp (4) is made of a high-temperature resistant material.

## Patentansprüche

1. Verfahren zur Herstellung eines Faserverbinders mit Mehrkern-Cluster, umfassend die folgenden Schritte:
Schritt 1, Anordnen einer Vielzahl von metallisierten Fasern zu einem Faserbündel (1);
Schritt 2, Reinigen der Oberfläche des Faserbündels (1) und Ausrichten der vorderen Endflächen aller Fasern in dem Faserbündel (1);
Schritt 3, Eintauchen des vorderen Endes des Faserbündels (1) in eine Metallaufschlämmung, um die Metallaufschlämmungsbeschichtung über dem vorderen Ende des Faserbündels (1) vorzunehmen;
Schritt 4, Anbringen einer ersten Klemme (3) an dem Faserbündel (1);
Schritt 5, Einführen des in Schritt 3 bearbeiteten Faserbündels (1) in eine Hülse (2);
Schritt 6, Bereitstellen einer Hochfrequenzspule (5) um das Faserbündel (1), sodass sich die Hülse (2) zwischen dem Faserbündel (1) und der Hochfrequenzspule (5) befindet;
Schritt 7, Anbringen einer zweiten Klemme (4) an dem Faserbündel (1); und Positionieren der Hülse (2) und der Hochfrequenzspule (5) zwischen der ersten Klemme (3) und der zweiten Klemme (4);
Schritt 8, Versorgen der Hochfrequenzspule (5) mit Strom, um die zwischen dem Faserbündel (1) und der Hülse (2) eingefüllte Metallaufschlämmung zu erhitzen und organische Lösungsmittel in der Metallaufschlämmung zu verflüchtigen, sodass das heiß geschmolzene Metall als Dichtung zwischen dem Faserbündel (1) und der Hülse (2) dienen kann.

2. Verfahren zur Herstellung eines Faserverbinders mit Mehrkern-Cluster nach Anspruch 1, wobei in Schritt 1 das Faserbündel (1) mit Nickel beschichtet wird und eine Beschichtungsdicke von 8-10 µm aufweist und die Faserlänge 8 cm beträgt.

3. Verfahren zur Herstellung eines Faserverbinders mit Mehrkern-Cluster nach Anspruch 1, wobei die Länge der an dem vorderen Ende des Faserbündels (1) befestigten Metallaufschlämmung nicht kleiner ist als eine Entfernung zwischen der hinteren Endfläche der Hülse (2) und der vorderen Endfläche des Faserbündels (1).

4. Verfahren zur Herstellung eines Faserverbinders mit Mehrkern-Cluster nach Anspruch 1, wobei die Entfernung zwischen der vorderen Endfläche der ersten Klemme (3) und der vorderen Endfläche des Faserbündels (1) 6 cm beträgt und die vordere Endfläche der zweiten Klemme (4) bündig mit der vorderen Endfläche des Faserbündels (1) abschließt; die Entfernung zwischen der vorderen Endfläche des Faserbündels (1) und der vorderen Endfläche der Hülse (2) im Bereich von 1-2,5 cm liegt; der Abstand zwischen der Bohrung der Hülse (2) und dem Umfangskreis des Faserbündels (1) 0,1 mm beträgt, d. h., der Durchmesser der Bohrung der Hülse (2) 0,2 mm größer als der Durchmesser des Umfangskreises des Faserbündels (1) ist.

5. Verfahren zur Herstellung eines Faserverbinders mit Mehrkern-Cluster nach Anspruch 1, wobei die Hochfrequenzspule (5) 4-6 s lang mit Strom versorgt wird und in Schritt 8 das Faserbündel (1) vertikal nach unten platziert wird; wobei die Länge der Hochfrequenzspule (5) gleich der der Hülse (2) ist.

6. Verfahren zur Herstellung eines Faserverbinders mit Mehrkern-Cluster nach Anspruch 1, wobei sowohl die erste Klemme (3) als auch die zweite Klemme (4) eine Innenbohrung in Form eines regelmäßigen Sechsecks aufweisen.

7. Verfahren zur Herstellung eines Faserverbinders mit Mehrkern-Cluster nach Anspruch 1, wobei die metallisierte Faser eine Großkern-Energiefaser mit einem Kerndurchmesser von 400 µm und Beschichtungen von 420 µm bzw. 440 µm ist.

8. Verfahren zur Herstellung eines Faserverbinders mit Mehrkern-Cluster nach Anspruch 1, wobei die Metallaufschlämmung eine gemischte Aufschlämmung aus Metallpulverpartikeln und einem organischen flüchtigen Lösungsmittel ist und das Metallpulverpartikel reines Aluminium ist und der Durchmesser des Pulverpartikels nicht größer als 1 µm ist.

9. Verfahren zur Herstellung eines Faserverbinders mit Mehrkern-Cluster nach Anspruch 8, wobei das organische flüchtige Lösungsmittel Alkohol, Aceton oder flüssiges Paraffin ist und das organische flüchtige Lösungsmittel 15-25 Gew.% ausmacht.

10. Verfahren zur Herstellung eines Faserverbinders mit Mehrkern-Cluster nach Anspruch 1, wobei die erste Klemme (3) aus einem flexiblen Material besteht und die zweite Klemme (4) aus einem hochtemperaturbeständigen Material besteht.

## Revendications

1. Procédé permettant la préparation d'un connecteur de fibre en grappe multicoeur, comprenant les étapes suivantes :
étape 1, agencement d'une pluralité de fibres métallisées pour former un faisceau de fibres (1) ;
étape 2, nettoyage de la surface du faisceau de fibres (1) et alignement des faces d'extrémité avant de toutes les fibres dans le faisceau de fibres (1) ;
étape 3, immersion de l'extrémité avant du faisceau de fibres (1) dans une suspension épaisse de métal pour réaliser le revêtement de suspension épaisse de métal sur l'extrémité avant du faisceau de fibres (1) ;
étape 4, mise en place d'une première pince (3) sur le faisceau de fibres (1) ;
étape 5, insertion du faisceau de fibres (1) traité à l'étape 3 dans une ferrule (2) ;
étape 6, fourniture d'une bobine haute fréquence (5) autour du faisceau de fibres (1) afin que la ferrule (2) soit située entre le faisceau de fibres (1) et la bobine haute fréquence (5) ;
étape 7, mise en place d'une seconde pince (4) sur le faisceau de fibres (1) ; et positionnement de la ferrule (2) et de la bobine haute fréquence (5) entre la première pince (3) et la seconde pince (4) ;
étape 8, excitation de la bobine haute fréquence (5) pour chauffer la suspension épaisse de métal remplissant un espace entre le faisceau de fibres (1) et la ferrule (2), et pour volatiliser le solvant organique dans la suspension épaisse de métal, afin que le métal fondu à chaud puisse servir de joint entre le faisceau de fibres (1) et la ferrule (2).

2. Procédé permettant la préparation d'un connecteur de fibre en grappe multicoeur selon la revendication 1, à l'étape 1, ledit faisceau de fibres (1) étant revêtu de nickel, et comportant une épaisseur de revêtement de 8-10 µm, et ladite longueur de fibre étant de 8 cm.

3. Procédé permettant la préparation d'un connecteur de fibre en grappe multicoeur selon la revendication 1, ladite longueur de la suspension épaisse de métal fixée à l'extrémité avant du faisceau de fibres (1) n'étant pas inférieure à une distance entre la face d'extrémité arrière de la ferrule (2) et la face d'extrémité avant du faisceau de fibres (1).

4. Procédé permettant la préparation d'un connecteur de fibre en grappe multicoeur selon la revendication 1, ladite distance entre la face d'extrémité avant de la première pince (3) et la face d'extrémité avant du faisceau de fibres (1) étant de 6 cm, et ladite face d'extrémité avant de la seconde pince (4) affleurant la face d'extrémité avant du faisceau de fibres (1) ; ladite distance entre la face d'extrémité avant du faisceau de fibres (1) et la face d'extrémité avant de la ferrule (2) étant comprise entre 1 et 2,5 cm ; ledit écart entre le trou de la ferrule (2) et le cercle externe du faisceau de fibres (1) étant de 0,1 mm, c'est-à-dire que le diamètre du trou de la ferrule (2) est supérieur de 0,2 mm au diamètre du cercle externe du faisceau de fibres (1).

5. Procédé permettant la préparation d'un connecteur de fibre en grappe multicoeur selon la revendication 1, ladite bobine haute fréquence (5) étant excitée pendant 4-6 s, et à l'étape 8, ledit faisceau de fibres (1) étant placé verticalement vers le bas ; ladite longueur de la bobine haute fréquence (5) étant égale à celle de la ferrule (2).

6. Procédé permettant la préparation d'un connecteur de fibre en grappe multicoeur selon la revendication 1, ladite première pince (3) et ladite seconde pince (4) comportant toutes deux un trou interne en hexagone régulier.

7. Procédé permettant la préparation d'un connecteur de fibre en grappe multicoeur selon la revendication 1, ladite fibre métallisée étant une fibre d'énergie à grand coeur, avec un diamètre de coeur de 400 µm et des revêtements de 420 µm et 440 µm respectivement.

8. Procédé permettant la préparation d'un connecteur de fibre en grappe multicoeur selon la revendication 1, ladite suspension épaisse de métal étant une suspension épaisse mélangée de particules de poudre métallique et de solvant volatil organique, et ladite particule de poudre métallique étant de l'aluminium pur et ledit diamètre de ladite particule de poudre n'étant pas supérieur à 1 µm.

9. Procédé permettant la préparation d'un connecteur de fibre en grappe multicoeur selon la revendication 8, ledit solvant volatil organique étant de l'alcool, de l'acétone ou de la paraffine liquide, et ledit solvant volatil organique représentant 15-25 % en poids.

10. Procédé permettant la préparation d'un connecteur de fibre en grappe multicoeur selon la revendication 1, ladite première pince (3) étant constituée d'un matériau flexible, et ladite seconde pince (4) étant constituée d'un matériau résistant aux températures élevées.
